# EUROPÄISCHE PATENTSCHRIFT

(11) **EP 3 051 373 B1**
(45) Veröffentlichungstag und Bekanntmachung des Hinweises auf die Patenterteilung: **08.05.2019**
(21) Anmeldenummer: 15153469.0
(22) Anmeldetag: 02.02.2015
(51) Int. Cl.: G05B 19/418

(54) **Auswechseln einer defekten Anlagenkomponente in einer Automatisierungsanlage**
Exchange of a defective system component in an automation assembly
Changement d'un composant d'installation défectueux dans une installation d'automatisation

(43) Veröffentlichungstag der Anmeldung: 03.08.2016
(73) Patentinhaber: Siemens Aktiengesellschaft, 80333 München (DE)
(72) Erfinder: Neidig, Jörg, 90419 Nürnberg (DE); Buschmann, Frank, 80336 München (DE)

(56) Entgegenhaltungen:
- EP-A1- 2 790 101
- EP-A1- 2 821 865
- GB-A- 2 403 043
- US-A1- 2014 046 618

## Beschreibung

Die Erfindung betrifft ein Verfahren zum Auswechseln einer defekten Anlagenkomponente in einer Automatisierungsanlage. Zu der Erfindung gehören auch eine Steuervorrichtung, die zum Durchführen des Verfahrens ausgelegt ist, sowie eine Automatisierungsanlage, welche die erfindungsgemäße Steuervorrichtung aufweist.

Eine Automatisierungsanlage kann Module oder Anlagenkomponenten aufweisen, die in der Automatisierungsanlage zusammenwirken, um einen vorbestimmten Prozess durchzuführen. Beispielsweise kann die Automatisierungsanlage eine Fertigungsanlage sein, in welcher ein Produkt, beispielsweise ein Kraftfahrzeug, gefertigt wird. Die Automatisierungsanlage kann auch eine Verfahrensanlage sein, in welcher ein Verfahren durchgeführt wird, beispielsweise die Gewinnung elektrischer Energie aus Kernkraft. Die Automatisierungsanlage kann auch eine Steueranlage sein, durch welche Geräte koordiniert gesteuert werden, beispielsweise Ampeln in einem Verkehrsnetz.

Falls eine der Anlagenkomponenten defekt ist und deshalb nicht mehr funktionstüchtig, so können die übrigen Anlagenkomponenten aufgrund der unterbrochenen Prozesskette nicht mehr den Prozess durchführen. Um eine Stillstandzeit der Automatisierungsanlage möglichst kurz zu halten, muss schnellstmöglich eine Ersatzkomponente für die defekte Anlagenkomponente gefunden werden und diese Ersatzkomponente für den Betrieb in der Anlage ertüchtigt werden, also z.B. parametriert oder programmiert werden. Insbesondere bei älteren Anlagen kann es sein, dass ein Gerätetyp oder Gerätemodell der defekten Anlagenkomponente nur mit großem Aufwand beschafft werden kann oder gar nicht mehr verfügbar ist. Muss dann eine Ersatzkomponente in der Automatisierungsanlage eingebaut werden, die auf einem anderen Gerätemodell beruht, so ist in der Regel auch eine Anpassung der übrigen Anlagenkomponenten nötig, damit die Ersatzkomponente überhaupt mit den übrigen Anlagenkomponenten zusammenwirken kann. Schlimmstenfalls kann sogar eine Neuplanung des Engineerings erforderlich sein, das heißt ausgehend von der neuen Ersatzkomponente müssen die jeweiligen Aufgaben, die durch jede der Anlagenkomponenten erfüllt werden, neu verteilt werden und entsprechend neue Steuerprogramme beispielsweise für speicherprogrammierbare Steuerungen (SPS) der einzelnen Anlagenkomponenten angefertigt und in den Anlagenkomponenten gespeichert werden.

Aus US 2014/0046618 ist bereit eine Vorrichtung und ein Verfahren bekannt, welches die Möglichkeit der Beschreibung einer Kompatibilität von Ersatzkomponenten in einem Prozeßkontrollsystem bieten. In einer Datenbank werden die Geräte-Charakteristiken von Geräten anhand von sogenannten Device Description Files, beinhaltend Field Device Characteristics wie Betriebsdaten der Geräte und/oder Funktionsblöcke verglichen. Dabei kann toolgestützt der Grad der Kompatibilität festgestellt werden, insbesondere können Listen hinterlegt sein, zu welchem Grad einzelne Geräte untereinander kompatibel sind.

Der Erfindung liegt die Aufgabe zugrunde bei einem Defekt einer Anlagenkomponente die Automatisierungsanlage mit geringem Aufwand wieder betriebsbereit zu machen indem eine kompatible Ersatzkomponente unabhängig von der konkreten technischen Bauweise ermittelt wird.

Die Aufgabe wird durch die Gegenstände der unabhängigen Patentansprüche gelöst. Vorteilhafte Weiterbildungen der Erfindung sind durch die Merkmale der abhängigen Patentansprüche gegeben.

Durch die Erfindung wird ein Verfahren bereitgestellt, durch welches das Auswechseln einer defekten Anlagenkomponente in der Automatisierungsanlage ermöglicht ist. Durch eine Steuervorrichtung der Automatisierungsanlage werden dabei die folgenden Schritte durchgeführt. Es wird eine Platzbeschreibung für den Betriebsplatz der Anlagenkomponente bereitgestellt. Der Betriebsplatz ist derjenige Ort in der Automatisierungsanlage, an welchem die defekte Anlagenkomponente positioniert ist oder betrieben worden ist. Die Platzbeschreibung enthält zumindest eine an dem Betriebsplatz zu erfüllende Betriebsbedingung. Mit anderen Worten ist durch die Platzbeschreibung beispielsweise die an dem Betriebsplatz auszuführende Aufgabe definiert oder beschrieben. Beispielsweise kann eine Platzbeschreibung für einen Betriebsplatz, an welchem ein Förderband positioniert ist, als Betriebsbedingung umfassen, dass ein Stückgut oder Produkt von einem Ort A, das heißt dem Förderbandanfang, zu einem Ort B, das heißt dem Förderbandende, zu transportieren ist.

Ist eine Anlagenkomponente defekt, so kommt eine mögliche Ersatzkomponente oder kommen mehrere mögliche Ersatzkomponenten als Austauschkomponente für die defekte Anlagenkomponente in Frage. Für zumindest eine solche mögliche Ersatzkomponente wird jeweils eine Komponentenbeschreibung bereitgestellt. Die Komponentenbeschreibung enthält von der jeweiligen Ersatzkomponente einnehmbare Betriebszustände. Wesentliches Merkmal ist hierbei, dass die Betriebszustände unabhängig von der technischen Bauweise der Ersatzkomponente beschrieben sind. Beispielsweise kann eine Komponentenbeschreibung besagen, dass ein Produkt am Ort A entgegengenommen werden kann und das Produkt an einen Ort B befördert werden kann. Die Komponentenbeschreibung gibt dabei nicht an, ob die zugehörige Ersatzkomponente ebenfalls ein Förderband ist oder beispielsweise ein Roboter, der das Produkt mittels eines Roboterarms von A nach B hebt.

Das Verfahren sieht des Weiteren vor, dass diejenige Komponentenbeschreibung ermittelt wird, bei welcher die einnehmbaren Betriebszustände jede in der Platzbeschreibung enthaltene Betriebsbedingung erfüllen. Mit anderen Worten wird durch die Steuervorrichtung überprüft, ob es eine Ersatzkomponente gibt, die in der Lage ist, durch Einnehmen entsprechender Betriebszustände jeder Betriebsbedingung gerecht zu werden. Diese Ersatzkomponente ist dann also ein vollwertiger Ersatz für die defekte Anlagenkomponente.

Entsprechend wird in einem weiteren Schritt signalisiert, dass die ausgewählte Ersatzkomponente für einen Einbau an dem Betriebsplatz geeignet ist. Mit anderen Worten wird signalisiert, dass die ausgewählte Ersatzkomponente an dem Betriebsplatz einzubauen ist.

Durch die Erfindung ergibt sich der Vorteil, dass bei Ausfall einer Anlagenkomponente, wenn also eine defekte Anlagenkomponente auszuwechseln ist, in automatisierter Weise, das heißt ohne ein Zutun eines Nutzers der Automatisierungsanlage, durch eine Steuervorrichtung eine geeignete Ersatzkomponente ermittelt werden kann, bei der es nicht nötig ist, dass sie vom selben Gerätemodell oder Komponententyp wie die defekte Anlagenkomponente ist, solange sie alle nötigen Betriebszustände einnehmen kann, durch welche die Betriebsbedingungen am Betriebsplatz erfüllt werden können. Beispielsweise kann also ein Fließband durch einen Roboter ersetzt werden, solange der Roboter alle nötigen Transportbewegungen vornehmen kann.

Zu der Erfindung gehört auch die beschriebene Steuervorrichtung. Die erfindungsgemäße Steuervorrichtung weist eine Prozessoreinrichtung auf, die dazu ausgelegt ist, eine Ausführungsform des erfindungsgemäßen Verfahrens durchzuführen. Die Prozessoreinrichtung kann beispielsweise einen oder mehrere Digitalprozessoren umfassen. Die Steuervorrichtung kann beispielsweise eine zentrale Rechenvorrichtung der Automatisierungsanlage sein oder eine speicherprogrammierbare Steuerung einer Anlagenkomponente, beispielsweise einer benachbart zu dem Betriebsplatz angeordneten Anlagenkomponente.

Schließlich gehört zu der Erfindung auch die beschriebene Automatisierungsanlage oder kurz Anlage, die durch eine Ausführungsform der erfindungsgemäßen Steuervorrichtung gekennzeichnet ist. Bei der Automatisierungsanlage kann es sich um eine Anlage handeln, wie sie eingangs beschrieben worden ist, das heißt eine Produktionsanlage oder eine Verfahrensanlage oder eine Steuerungsanlage.

Zu der Erfindung gehören auch Weiterbildungen des erfindungsgemäßen Verfahrens, die im Folgenden beschrieben sind.

In einer Weiterbildung wird auch bei der Platzbeschreibung des Betriebsplatzes die zumindest eine Betriebsbedingung jeweils unabhängig davon definiert, wie die Betriebsbedingung erfüllt wird. Mit anderen Worten wird bei der Platzbeschreibung insbesondere auf eine Darstellung der internen dynamischen Vorgänge am Betriebsplatz verzichtet. Hierdurch ergibt sich der Vorteil, dass sich durch die Platzbeschreibung keine Einschränkung bei der Auswahl in Frage kommender oder möglicher Ersatzkomponenten ergibt. Beispielsweise wird in der Platzbeschreibung darauf verzichtet, ein Fließband zu erwähnen, so dass auch ein Roboter mit Greifarm die zumindest eine zu erfüllende Betriebsbedingung erfüllen kann.

In einer Weiterbildung enthält die Platzbeschreibung zumindest eine Eingangsbedingung als Betriebsbedingung. Jede Eingabebedingung beschreibt jeweils einen von der Anlage benötigten Betriebszustand der Ersatzkomponente, wie er zu Beginn eines an dem Betriebsplatz durchzuführenden Prozessschrittes vorliegen soll. Beispielsweise kann eine Ortsangabe enthalten sein, welche angibt, wo ein Produkt von der Ersatzkomponente entgegengenommen oder empfangen werden soll. Zusätzlich oder alternativ dazu kann die Eingangsbedingung einen Anfangszustand eines an dem Betriebsplatz zu bearbeitenden Produkts beschreiben. Mit anderen Worten wird angegeben, von welchem Fertigungszustand oder Produktzustand die Ersatzkomponente ausgehen können soll. Beispielsweise kann bei einer Flaschenabfüllanlage festgelegt sein, dass die Ersatzkomponente leere Flaschen empfangen können soll, die aber schon gereinigt sind. Zusätzlich oder alternativ kann die Eingangsbedingung einen Betriebszustand einer dem Betriebsplatz zuarbeitenden Anlagenkomponente definieren. Beispielsweise kann angegeben sein, dass ein Produkt mit einer bestimmten Fördergeschwindigkeit aus der zuarbeitenden Anlagenkomponente austritt und am Betriebsplatz in Empfang genommen werden muss. Durch Berücksichtigen der Eingangsbedingung ergibt sich der Vorteil, dass die ausgewählte Ersatzkomponente zuverlässig auch ohne Abänderung der übrigen Automatisierungsanlage mit dieser gekoppelt werden kann.

In einer Weiterbildung enthält die Platzbeschreibung zumindest eine Ausgabebedingung als jeweilige Betriebsbedingung. Jede Ausgabebedingung kann einen am Betriebsplatz von der Anlage benötigten Endzustand der Ersatzkomponente beschreiben. Mit Endzustand ist hierbei insbesondere gemeint, dass nach Erledigung eines zyklisch zu wiederholenden Arbeitsschrittes die Ersatzkomponente den Endzustand aufweisen muss. Beispielsweise kann dies eine Roboterarm-Endstellung sein, die nötig ist, damit das transportierte Stückgut oder Produkt von einer nachgelagerten Anlagenkomponente empfangen werden kann. Zusätzlich oder alternativ dazu kann die Ausgabebedingung einen Endzustand eines an dem Betriebsplatz zu bearbeitenden Produkts definieren. Mit anderen Worten wird festgelegt, welchen Fertigungsschritt oder Produktionsschritt die Ersatzkomponente an dem Produkt durchführen muss. Zusätzlich oder alternativ dazu kann ein Betriebszustand einer dem Betriebsplatz nachgelagerten Anlagenkomponente definiert sein. Mit anderen Worten wird festgelegt, mit welchem Betriebszustand der nachgelagerten Komponente die Ersatzkomponente umgehen können oder kompatibel sein muss. Durch diese Weiterbildung ergibt sich der Vorteil, dass die von der Ersatzkomponente beim Durchführen der ihr zugeordneten Prozessschritte erzeugten Ausgaben problemfrei und/oder erfolgreich an die übrige Automatisierungsanlage ausgegeben werden können.

In einer Weiterbildung enthält jede Komponentenbeschreibung zumindest eine von der Ersatzkomponente benötigte Betriebsumgebungsbedingung, also Randbedingungen, die für den Betrieb der Ersatzkomponente nötig sind. Durch die Steuervorrichtung wird diejenige Ersatzkomponente ausgewählt, deren zumindest eine Betriebsumgebungsbedingung durch den Betriebsplatz erfüllt wird. Beispielsweise kann eine Betriebsumgebungsbedingung sein, dass ein bestimmter Luftstrom zum Kühlen der Ersatzkomponente aus der Umgebung angesogen und wieder in die Umgebung gefördert werden können soll. Ist der Betriebsplatz entsprechend offen gestaltet, so dass dieser Kühlluftstrom gefördert werden kann, so ist diese Ersatzkomponente geeignet, um am Betriebsplatz betrieben zu werden. Ist dagegen der Betriebsplatz beispielsweise besonders eng gebaut, so kann nur eine Ersatzkomponente gewählt werden, die einen geringeren Luftstrom oder keine Luftkühlung benötigt. Durch Berücksichtigen der Betriebsumgebungsbedingung ergibt sich der Vorteil, dass die ausgewählte Ersatzkomponente ohne weitere Anpassung der übrigen Automatisierungsanlage direkt am Betriebsplatz in Betrieb genommen werden kann.

In einer Weiterbildung umfasst jede Komponentenbeschreibung eine Schnittstellendefinition einer elektronischen Schnittstelle der Ersatzkomponente. Durch die Schnittstellendefinition ist ein Parameter beschrieben, der über die Schnittstelle übertragen werden kann. Mit anderen Worten ist beschrieben, welcher Wert entweder von der Ersatzkomponente hin zu einer nachgelagerten Anlagenkomponente oder von einer vorgelagerten Anlagenkomponente hin zur Ersatzkomponente übertragen werden kann. Beispielsweise kann also angegeben sein, dass über die Schnittstelle ein Temperaturwert oder ein Geschwindigkeitswert übertragen wird. Zusätzlich oder alternativ dazu kann ein Signalformat eines Signals durch die Schnittstellendefinition beschrieben sein. Beispielsweise kann angegeben sein, dass ein Signalwert von beispielsweise 3 Volt einer Temperatur von beispielsweise 20 Grad entspricht. Durch die Steuervorrichtung wird eine Kompatibilität einer anlagenseitigen Anschlussschnittstelle mit der Schnittstelle der Ersatzkomponente verglichen. Mit anderen Worten wird überprüft, ob die anlagenseitig an der elektronischen Anschlussschnittstelle bereitgestellten Parameter und/oder Signale mit den an der Schnittstelle der Ersatzkomponente vorgesehenen Parameter und/oder Signale übereinstimmen. Hierdurch ergibt sich der Vorteil, dass durch die Steuervorrichtung überprüft wird, ob eine Steuerung und/oder Überwachung der Ersatzkomponente mit der bisherigen Anlagenprogrammierung oder Anlagenkonfiguration möglich ist oder durchgeführt werden kann. Hierdurch ergibt sich der Vorteil, dass eine solche Ersatzkomponente ermittelt werden kann, durch welche eine Umkonfiguration oder Umprogrammierung der Automatisierungsanlage unnötig ist oder darauf verzichtet werden kann.

In diesem Zusammenhang sieht eine Weiterbildung der Erfindung vor, dass für den Fall, dass eine derart kompatible Ersatzkomponente nicht ermittelt werden kann, folgender Verfahrensschritt durchgeführt wird. Es wird eine Signalkonvertierung erzeugt, durch welche das Signal der Schnittstelle und ein Signal der anlagenseitigen Anschlussschnittstelle ineinander umgewandelt oder umgerechnet werden. Mit anderen Worten können sowohl die Automatisierungsanlage als auch die Ersatzkomponente ohne Umkonfiguration, das heißt unverändert, weiterbetrieben werden. Am Signalübergang zwischen der Anschlussschnittstelle der Automatisierungsanlage und der Schnittstelle der Ersatzkomponente wird durch die Signalkonvertierung die Inkompatibilität zwischen den Signalen kompensiert. Die Signalkonvertierung kann beispielsweise durch ein Programmmodul realisiert sein, das durch die Ersatzkomponente und/oder einer vorgelagerten oder nachgelagerten Anlagenkomponente durchgeführt wird. Es kann zusätzlich oder alternativ eine Umwandlungstabelle vorgesehen sein.

In einer Weiterbildung der Erfindung ist jede Komponentenbeschreibung als ein digitales Modell der Ersatzkomponente bereitgestellt, wobei durch das Modell ein Verhalten der Ersatzkomponente an einer physikalischen Schnittstelle und/oder einer elektronischen Steuerschnittstelle der Ersatzkomponente nachgebildet wird. Mit anderen Worten wird durch das Modell die Ersatzkomponente von außen beschrieben oder mit anderen Worten als eine Black-Box oder eben mit einer Außenperspektive. Hierdurch wird es in vorteilhafter Weise ermöglicht, Ersatzkomponenten unabhängig von ihrer technischen Ausgestaltung, beispielsweise als Fließband oder als Roboter mit Roboterarm, darzustellen und ihre Eignung für den Betrieb am Betriebsplatz z.B. in einer Simulation zu überprüfen.

In einer Weiterbildung sind in jeder Komponentenbeschreibung jeweils auch physikalische Eigenschaften der Ersatzkomponente enthalten. Insbesondere sind als physikalische Eigenschaften geometrische Abmessungen und/oder Bauraumgeometrien und/oder Anschlussgeometrien von Anschlüssen der Ersatzkomponente enthalten. Durch die Steuereinrichtung werden die physikalischen Eigenschaften mit korrespondierenden physikalischen Gegebenheiten am Betriebsplatz verglichen. Es wird also überprüft, ob eine geometrische Abmessung oder Bauraumgeometrie der Ersatzkomponente mit dem zur Verfügung stehenden Bauraum oder Platz am Betriebsplatz überein stimmt. Genauso können Anschlussgeometrien von Versorgungsanschlüssen oder Versorgungsleitungen mit den Anschlussgeometrien der Ersatzkomponente verglichen werden. Bei Erkennen eines Unterschieds zwischen den Eigenschaften und den korrespondierenden Gegebenheiten am Betriebsplatz wird die zugehörige Ersatzkomponente von der Auswahl ausgeschlossen. Hierdurch ergibt sich der Vorteil, dass beim Ermitteln der Ersatzkomponente durch die Steuervorrichtung keine Ersatzkomponente ermittelt wird, deren Einbau in die Automatisierungsanlage unmöglich wäre. Hierdurch ist ein weiterer, durch einen Benutzer der Automatisierungsanlage ansonsten durchzuführender Überprüfungsschritt oder Plausibilisierungsschritt automatisiert.

In einer Weiterbildung ist in jeder Komponentenbeschreibung ein am Betriebsplatz von der Automatisierungsanlage bereitzustellendes Betriebsmittel der Ersatzkomponente angegeben. Durch die Steuervorrichtung wird die zugehörige Ersatzkomponente von der Auswahl ausgeschlossen, falls das Betriebsmittel fehlt. Als Betriebsmittel kann beispielsweise ein benötigter Energiefluss, also z.B. ein Mindestwert für z.B. elektrische Leistung oder Heizleistung oder Kühlleistung, angegeben sein. Es kann auch vorgesehen sein, dass als Betriebsmittel beispielsweise ein Druckluftanschluss oder ein Wasseranschluss benötigt wird. Fehlt ein Betriebsmittel, so ist der Betrieb der Ersatzkomponente am Betriebsplatz unmöglich oder die Automatisierungsanlage muss zumindest nachgerüstet werden. Durch Ausschließen der Ersatzkomponente werden durch die Steuervorrichtung also nur solche Ersatzkomponenten ausgewählt, die mit den vorhandenen Betriebsmitteln betrieben werden können.

Wie bereits ausgeführt, kann die Steuervorrichtung durch eine zentrale Prozessoreinrichtung der Automatisierungsanlage, also beispielsweise durch eine Prozessoreinrichtung eines Leit-stands oder eines Engineering-Systems der Automatisierungsanlage bereitgestellt sein. Alternativ dazu kann vorgesehen sein, dass die Steuervorrichtung durch eine z.B. dem Betriebsplatz benachbarte Anlagenkomponente bereitgestellt wird. Dies ist insbesondere bei einer dezentralen Steuerung der Automatisierungsanlage vorteilhaft.

In einer Weiterbildung der Erfindung wird die ausgewählte Ersatzkomponente auf der Grundlage der Platzbeschreibung für einen Betrieb an dem Betriebsplatz auch konfiguriert. Mit anderen Worten wird die Ersatzkomponente durch die Steuervorrichtung also selbsttätig oder automatisch konfiguriert oder programmiert. Hierdurch ergibt sich der Vorteil, dass ein Betriebsverhalten der Ersatzkomponente an den am Betriebsplatz benötigten Betrieb, also für die Durchführung der Aufgabe am Betriebsplatz, vorbereitet wird, ohne dass hierzu ein Nutzer die Ersatzkomponente programmieren muss.

In einer Weiterbildung werden in einem Engineering-Plan, der einen Betrieb der Automatisierungsanlage festlegt, die Engineeringdaten der defekten Anlagenkomponente durch Engineeringdaten der ausgewählten Ersatzkomponente ersetzt. Engineeringdaten stellen eine Beschreibung der technischen Eigenschaften der jeweiligen Komponente dar. Hierdurch ergibt sich der Vorteil, dass auch der Engineering-Plan, also der technische Plan der Anlage, automatisch an die neue Anlagenkonfiguration angepasst wird. Der Engineering-Plan kann beispielsweise die Steuerprogramme für die speicherprogrammierbaren Steuerungen aller Anlagenkomponente umfassen. Der Engineering-Plan kann auch beispielsweise die geometrische Anordnung der Anlagenkomponenten, beispielsweise in einer Betriebshalle oder auf einem Betriebsgelände, beschreiben.

Im Folgenden ist ein Ausführungsbeispiel der Erfindung beschrieben. Hierzu zeigt:
FIG 1 eine schematische Darstellung einer Ausführungsform der erfindungsgemäßen Automatisierungsanlage und
FIG 2 ein Flussdiagramm zu einer Ausführungsform des erfindungsgemäßen Verfahrens.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

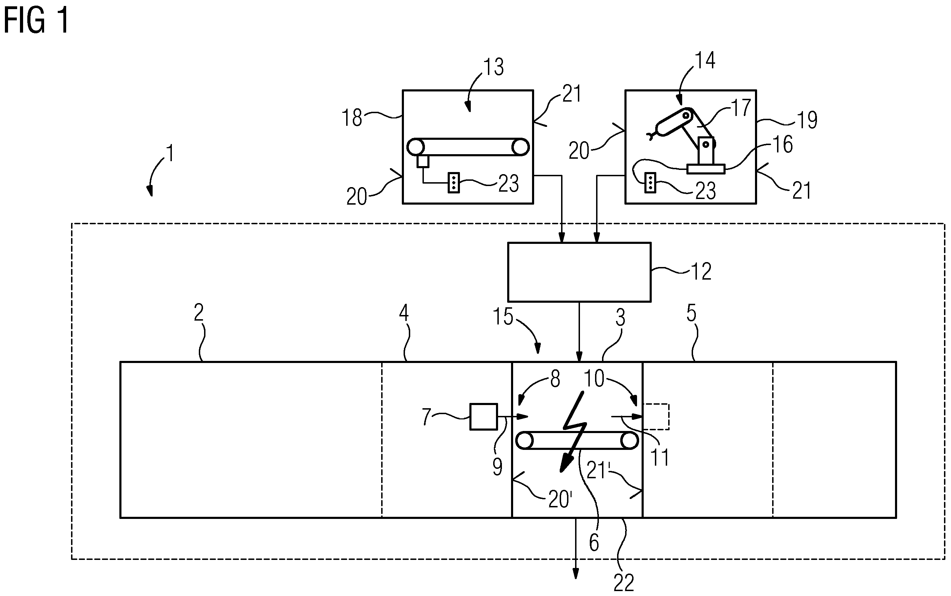

FIG 1 zeigt eine Automatisierungsanlage 1, bei der es sich um eine Produktionsanlage, eine Verfahrensanlage oder eine Steuerungsanlage handeln kann. Die Automatisierungsanlage oder kurz Anlage 1 kann mehrere Anlagenkomponenten 2 aufweisen. Dargestellt sind eine defekte Anlagenkomponente 3 sowie eine vorgelagerte Anlagenkomponente 4 und eine nachgelagerte Anlagenkomponente 5.

Beispielsweise kann die defekte Anlagenkomponente 3 ein Fließband 6 aufweisen, durch welches von der vorgelagerten Anlagenkomponente 4 ein Werkstück oder Produkt 7 an einem Empfangsort 8 mit einer vorgegebenen Fördergeschwindigkeit 9 empfangen oder entgegengenommen wird und das Produkt 7 an einem Ablieferort oder Endort 10 der nachgelagerten Anlagenkomponente 5 beispielsweise mit einer vorgegebenen Fördergeschwindigkeit 11 übergeben wird. Die Übergabeorte 8, 10 und die Fördergeschwindigkeiten 9, 11 stellen Betriebsbedingungen für einen Betrieb der Automatisierungsanlage 1 dar.
Durch den Defekt der defekten Anlagenkomponente 3 ist in dem gezeigten Beispiel ein Betrieb der Automatisierungsanlage 1 nicht mehr möglich, weil die Anlagenkomponente 3 z.B. stillsteht. Die defekte Anlagenkomponente 3 muss ausgetauscht werden. Hierzu kann die Automatisierungsanlage eine Steuervorrichtung 12 aufweisen, welche dazu ausgelegt sein kann, aus mehreren Ersatzkomponenten 13, 14 eine geeignete Ersatzkomponente für die defekte Anlagenkomponente 3 zu ermitteln. Die ausgewählte Ersatzkomponente 13, 14 kann dann am selben Einbauplatz 15 zwischen der vorgelagerten Anlagenkomponente 4 und der nachgelagerten Anlagenkomponente 5 eingebaut werden und ist in der Lage, am Empfangsort 8 das Produkt 7 bei der gegebenen Fördergeschwindigkeit 9 entgegen zu nehmen und am Endort 10 das Produkt 10 mit der gegebenen Fördergeschwindigkeit 11 der nachgelagerten Anlagenkomponente 5 zu übergeben. Hierbei ist die Steuervorrichtung 12 aber in der Lage, als Ersatzkomponente 13, 14 auch eine Anlagenkomponente auszuwählen, die nicht in derselben Weise aufgebaut ist wie defekte Anlagenkomponente 3, insbesondere muss sie kein Fließband 6 aufweisen. In der FIG 1 ist dargestellt, dass die Ersatzkomponente 13 beispielsweise zwar ebenfalls ein Fließband aufweisen kann, aber die Ersatzkomponente 14 beispielsweise durch einen Roboter 16 mit einem Roboterarm 17 gebildet sein kann.

Hierzu kann für die Auswahl durch die Steuervorrichtung 12 jede Ersatzkomponente 13, 14 durch eine Komponentenbeschreibung 18, 19 repräsentiert sein oder beschrieben sein. In FIG 1 ist die jeweilige Komponentenbeschreibung 18, 19 als Black-Box oder Modell dargestellt, durch welches jede der in Frage kommenden oder möglichen Ersatzkomponenten 13, 14 durch ihre Außenwirkung beschrieben ist.

Jede Komponentenbeschreibung 18, 19 kann beispielsweise Eingangsbedingungen 20 umfassen. Die Eingangsbedingungen 20 können beispielsweise angeben, an welchem Empfangsort 8 ein Produkt entgegengenommen werden kann und beispielsweise mit welcher Fördergeschwindigkeit 9 die Entgegennahme möglich ist.
Des Weiteren kann jede Komponentenbeschreibung 18, 19 Ausgabebedingungen 21 umfassen. Durch die Ausgabebedingungen 21 kann beispielsweise angegeben sein, an welchem Ausgabeort 10 und/oder mit welcher Fördergeschwindigkeit 11 ein Produkt durch die Ersatzkomponente 13, 14 an eine nachgelagerte Anlagenkomponente 5 übergeben werden kann.

Die Steuervorrichtung 12 kann allein auf der Grundlage der Komponentenbeschreibungen 18, 19 und einer korrespondierenden Platzbeschreibung 22 überprüfen, ob und welche Ersatzkomponente 13, 14 als Ersatz für die defekte Anlagenkomponente 3 geeignet ist. Die Platzbeschreibung 22 kann beispielsweise auf der Grundlage von Engineeringdaten gebildet sein, durch welche ein Betrieb der Anlagenkomponenten 3, 4, 5 in der Automatisierungsanlage 1 definiert oder festgelegt oder programmiert ist. Die Platzbeschreibung 22 kann z.B. die beschriebenen Betriebsbedingungen umfassen. Für den Betriebsplatz 15 können durch die Platzbeschreibung 22 auch Eingangsbedingungen 20' und Ausgabebedingungen 21' bereitgestellt sein, zu denen die Eingangsbedingungen und den Ausgabebedingungen der Ersatzkomponenten 13, 14 passen sollen.

Durch die Komponentenbeschreibungen 18, 19 und die Platzbeschreibung 22 können noch weitere Randbedingungen definiert sein, beispielsweise eine Geometrie eines am Betriebsplatz 15 zur Verfügung stehenden Bauraums oder Freiraums. Des Weiteren kann beispielsweise zumindest eine Anschlussgeometrie definiert sein. Beispielsweise kann zumindest eine elektrische Schnittstelle und/oder elektronische Kommunikationsschnittstelle definiert sein. In FIG 1 ist beispielhaft eine elektronische Schnittstelle 23 zum Übertragen von zumindest einem Parameter und/oder Signal dargestellt.

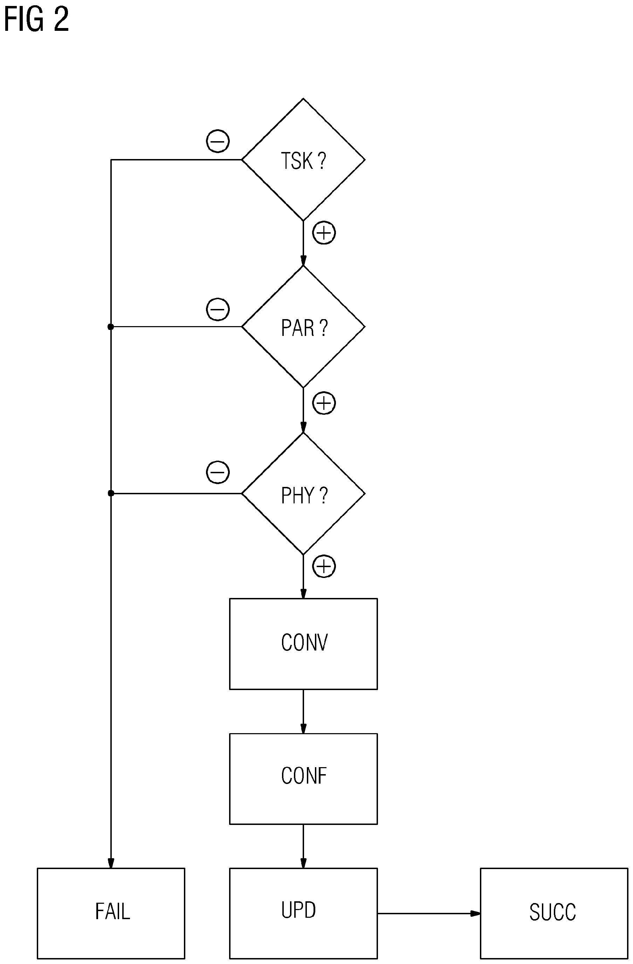

Zum Überprüfen, ob eine gegebene Ersatzkomponente 13, 14 einen geeigneten Ersatz für die defekte Anlagenkomponente 3 darstellt, kann das folgende, im Zusammenhang mit FIG 2 beschriebene Verfahren durch die Steuervorrichtung 12 durchgeführt werden.

Bei Mängeln einer technischen Komponente oder eines Moduls einer Produktionsanlage (z.B. eines Förderbands oder einer Produktionsmaschine) sind unvorhersehbare Wartungstätigkeiten nötig, damit der Betriebszustand so schnell wie möglich wieder erreicht werden kann. Wenn die beschädigte Komponente nicht repariert werden kann, muss sie ersetzt werden. Jedoch ist es aus manchen Gründen unmöglich oder unvorteilhaft, die beschädigte Komponente durch eine identische zu ersetzen: Die originale Komponente wird nicht mehr produziert, die identische Komponente ist nicht auf Lager und/oder die Nutzung einer besseren Komponente (günstiger, robuster...) wird bevorzugt.

Wenn eine Komponente nicht durch eine identische ersetzt wird, entsteht die Frage, welche Komponente als Ersatzteil genutzt werden kann. Auswechslungen müssen schnell erledigt werden. Es ist typisch, keine Zeit aufwenden zu müssen, um alte Dokumente mit Beschreibungen der defekten Anlagenkomponente zu suchen. Deshalb wird beim Auswechseln oft nur auf der Grundlage des Typenschildes einer beschädigten Anlagenkomponente geprüft, was in vielen Fällen nicht genug Information ergibt. Zum Beispiel verzeichnet ein Typenschild eines elektrischen Motors eine Nettoleistung und maximalen Strom, aber keine Eigenschaften wie maximale Beschleunigung.

Um auf der sicheren Seite zu sein, wird in der Regel eine Komponente ausgewählt, die zumindest die gleiche Leistung erbringt, wie die Komponente, die sie ersetzt, auch wenn die Aufgaben mit einer weniger leistungsbringenden Komponente ausgeführt werden kann.

Oftmals wird die Komponentenkonfiguration oder -änderung wird nicht beachtet (Änderung, Firmenwarenversion)

Zudem muss die Automatisierungstechnik muss manuell geändert werden. Die Hardwarekonfiguration muss gewechselt und auf die SPS oder den PLC (Programmable Logic Controller) herunterladen, um dem PLC die neue Hardware bekannt zu machen.

Signale einer neuen Komponente können verschiedene mathematische Einheiten enthalten, d.h. eine Signalkonversion kann notwendig sein.

Logikschaltungen (Verknüpfungen)/Treiber/Programmbibliotheken können unterschiedlich sein, d. h. eine neue automatische Logikschaltung muss dann angewendet werden.

Hardwareschnittstellen können unterschiedlich sein; d.h. ein Umplanen des Kommunikationsbusses kann notwendig sein.

Die Dokumentation der Anlage muss erneuert werden.

Die Steuervorrichtung 12 erreicht mit dem Verfahren nach FIG 2, eine technische Komponente durch eine vom Gerätemodell oder Gerätetyp her komplett andere zu ersetzen, die aber die gleichen Hauptaufgaben leisten kann. Zum Beispiel kann ein beschädigtes Förderband durch einen Roboter (eine Maschine) ersetzt werden, der sogenannte Pick-and-Place-Anwendungen durchführen kann. En beschädigter Bohrer, der durch eine CNC-Maschine ersetzt wird, kann ebenfalls Löcher bohren.
Das ist ein wichtiger Schritt in Richtung flexible industrielle Produktion 4.0.

Das Verfahren geht davon aus, dass die Anlage eingerichtet wurde und lief, bis eine Anlagenkomponente 3 einen Fehler hatte. Bis zum Zeitpunkt des Defekts wurde ein Engineering-Plan angewandt, nach welchem jede Komponente hatte klar definierte Aufgaben hatte.

Dem Verfahren liegt der Idee zugrunde, sicher zu stellen, dass die Aufgaben einer beschädigten Komponente durch eine andere Komponente erfüllt werden, ohne festzustellen, wie die Aufgabe durch die Ersatzkomponente gelöst wird. Dies wird erreicht, indem eine Beschreibung (ein Modell) der Komponente bereitgestellt wird, die die physischen und informationstechnischen Eigenschaften der Komponente beschreibt sowie die Aufgaben beschreibt, die von einem externen Ausgangspunkt (Black-Box) umgesetzt werden können. Dieses Modell wird dann entsprechend den Anforderungen der Aufgabe der Komponente angepasst, die gleiche Funktionen/Eigenschaften aufweisen.

Das Softwaremodell der Komponente enthält folgende Aspekte:
Eine Liste mit den semantischen Beschreibungen der Aufgaben, die die Komponente leisten kann. Die Beschreibung jeder Aufgabe kann in Form einer statischen Vorbedingung und Nachbedingung erfolgen.

Eine Vorbedingung beschreibt die Bedingungen oder Konditionen, die erfüllt werden müssen bevor die Komponente mit seinen Aufgaben beginnen kann. Dies schließt die Voraussetzungen mit ein, wie zum Beispiel den Zustand der Komponente, den Anfangszustand des Produkts, was wiederum von der Komponente beeinflusst wird und den Zustand einer anderen Komponente, die mit der interessanten/benötigten Komponente verbunden ist.

Eine Nachbedingung beschreibt die Konditionen, die erfüllt werden müssen, nachdem die Komponente seine Aufgaben beendet hat. Dies schließt wiederum die Voraussetzungen mit ein, wie zum Beispiel den Zustand der Komponente selbst, der Endzustand des Produkts, nachdem die Komponente seine Aufgaben beendet hat und den Zustand der anderen Komponente, die mit der interessanten/benötigten Komponente verbunden ist.

Die Vor- oder Nachbedingung kann für spezielle Komponenten, wie zum Beispiel Sensoren ausfallen.

Die Aufgaben (Tasks) können eine semantische Beschreibung bereitstellen, um die Definition der Zielsetzung einfacher zu machen, wie z.B. "Lagerung" oder "Transport".
Eine semantische Beschreibung der Schnittstelle der Komponente kann als eine Beschreibung der Variablen der Komponente, die beeinflusst oder gemessen werden können, angegeben werden. Optional können physikalische relevante Bedingungen für die mechanische Ausstattung der Komponente in der Anlage (z.B. maximale Komponentengröße, Flanschgrößen, Verbindungstypen) angegeben sein. Optional können weitere Einschränkungen bezüglich der Nutzung der Komponente (z.B. maximal benötigte Energie) angegeben sein.

Der interne dynamische Prozess der Komponente ist nicht Teil des Modells. Zum Beispiel wird das Modell von einem externen Ausgangspunkt bereitgestellt (Black-Box).

Das Softwaremodell des Standortes der Komponente, d.h. die Platzbeschreibung, enthält die gleichen Aspekte wie das Modell der Komponente, beschreibt jedoch die Aufgabe, die eine Komponente und diesem Ort erfüllen muss.

Wenn die beschädigte Komponente durch eine neue ersetzt wird, kann die Steuervorrichtung, z. B. eine Nachfolgerkomponente oder eine Nachbarkomponente (zentrale oder dezentrale Eigenschaften) folgende Schritte durchführen (siehe FIG 2):
Übereinstimmung der Aufgabe prüfen (TASK?): Prüfen zumindest eine der Ersatzkomponenten, eine Aufgabenliste oder Taskliste enthält, die die benötigten Aufgaben durchführen kann.

Wenn keine Anpassung gefunden worden ist (in FIG 2 durch ein Minus-Zeichen "-" dargestellt): Abbruch (FAIL).

Wenn eine Ersatzkomponente gefunden worden ist (in FIG 2 durch eine Plus-Zeichen "+" dargestellt): Prüfen, ob die Komponente obligatorische Variablen bereitstellt, die gemessen oder beeinflusst werden können (PAR?).
Optional: Prüfen, ob die Komponente noch zusätzliche Anforderungen wie zum Beispiel physikalische Randbedingungen hat (PHY?).

Falls nötig, die Schnittstellenwerte und/oder Schnittstellensignale der Komponente umwandeln (CONV) und an die Anschlussschnittstelle der verbundenen Komponenten anpassen. Hierzu können bekannte Methoden wie z.B. Plug&Play angewendet angewendet werden.

Die Konfiguration oder Parametrierung der beteiligten Komponente erneuern (CONF), zum Beispiel die benötigte Aufgabe auflisten und den passenden Parameter festlegen.

Technische Daten der Anlage erneuern, z.B. im Engineering-Plan (UPD - Update).

Erfolgsmeldung ausgeben oder signalisierten (SUCC - Success).

Das Verfahren gemäß FIG 2 ergibt eine Prüfmethode, falls eine Ersatzkomponente den Anforderungen für eine Aufgabe entspricht, die auf einem Modell gemäß einer Black-Box basiert, z.B. ohne zu wissen, wie die Ersatzkomponente diese Aufgabe erfüllt. Deshalb muss die Ersatzkomponente der originalen Komponente nicht ähneln, kann jedoch die Aufgaben auf komplett andere Art bewältigen/erfüllen.

Solch eine Komponente lässt sich somit in eine bestehende Produktionsanlage ohne manuelle Konfiguration oder Anpassung integrieren.

Die Anzahl der Ersatzteile, die auf Lager gehalten werden müssen, kann reduziert werden. Dennoch ergibt sich eine zunehmende Verfügbarkeit der Produktionsanlagen, da das Ersetzen der Komponente schneller abläuft und das Problem, das korrekte Ersatzteil nicht zu besitzen, reduziert wird.

Weitere Beispiele veranschaulichen diese Vorteile.

In einem ersten Beispiel füllt man in einer Abfüllanlage den Saft mit einem Dosierventil ab. Nach einer Fehlfunktion kann man dies nicht mehr einsetzen bzw. benutzen. Aufgrund des Lieferengpasses sind keine Ersatzteile für Dosierventile auf Lager. Das Unternehmen entscheidet sich deshalb dafür, stattdessen eine Messpumpe zu benutzen, selbst wenn es kostenintensiver ist als die Dosierung und unterschiedlich automatisiert ist.

Das Maßeinheitsröhrchen benötigt einen sehr spezifischen Druck und eine Dichte der eingegangenen Flüssigkeit und tätigt eine Aufgabe, indem man das Ventil für eine kurze Zeit öffnet. Eingangsbedingungen: Einfülldruck = [2.95 bar bis 3.05 bar]; Flüssigkeitsdichte = [0.99 kg/m3 bis 1.01 kg/m3]; Ausgabebedingungen: Volumen = [mindestens 0.001 m3]; Genauigkeit = [0.0001 m3]; Schnittstellensignal: (FUNCTION = "Öffnungswert"; TYPE = binär; WERT_Hoch=0.001 m3/0.01s; WERT Niedrig = 0.0m3/0.01s)

Eine Pumpe als mögliche Ersatzkomponente funktioniert unabhängig vom Druck und der Flüssigkeitsdichte:
Eingangsbedingungen: Einfülldruck = [0.1 bar bis 10 bar];
Flüssigkeitsdichte = [0.1 kg/m3 bis 3.5 kg/m3];
Ausgabebedingung: Volumen = [mindestens 0.001 m3];
Genauigkeit = [0.0001 m3]. Schnittstellensignal: (FUNCTION= "volume"; TYPE=integer,' UNlT=mm3/0.001s).

Der Standort wurde ursprünglich für das Dosierventil festgelegt: Eingangsbedingung: Eingangsdruck = [3.0 bar] ; Flüssigkeitsdichte = [1.0 kg/m3]; Ausgabebedingung: Volumen = [0.02 m3]; Genauigkeit = [0.002 m3].

Das Vergleichsergebnis zeigt, dass das Ventil durch die Pumpe ersetzt werden kann. Das Inputsignal ändert sich automatisch beim Automatisierungsprojekt gemäß der semantischen Beschreibung.

Ein zweiten Bespiel betrifft eine Produktionsanlage bei welcher mehrere Produktionsschritte auf einer Metallplatte in Folge durchgeführt werden müssen. Die Metallplatte wird von Produktionsstelle zu Produktionsstelle über ein Fertigungsband bewegt. Ein abrupt aufkommender Fehler legt das Fertigungsband still, sodass es einige Tage dauert, bis das Problem bewältigt wird. Um die Produktion weiter durchführen zu können, entscheidet sich das Unternehmen dafür, das Laufband zeitweise durch eine Pick-and-Place-Maschine zu ersetzen, die anderweitig zu dem Zeitpunkt nicht benötigt wird.

Laufbandsegment: Eingangsbedingung: PART_location = <x> J x =[0 ..4.5m], Ausgabebedingung: PART_location = <x> : x =[0 ..4.5m,' LOCATION_precision = 0.1m]; Schnittstellensignal: (FUNCTION= "relative position"; TYPE=float,' UNIT=mn1),' (FUNCTION= "start trigger"; TYPE=binary).

Die Maschine (Aufgabe: Pick&Place): Eingangsbedingungen:
PART_location = <x,y,z> : x2+y2+z2 < 9/m2; LOCATION_precision = 0.01m; Ausgabebedingungen: PART_location = <x,y,z> J x2+y2+z2 < 9m2,' LOCATION_precision = 0.01m;
Schnittstellensignal: (FUNCTION= "start position"; ...);
(FUNCTION: "end position"; ...);(FUNCTION="start trigger"; TYPE=binary)

Standort: Eingangsbedingung: PART_location = <0, 0, 0>; Ausgabebedingung: PART_location = <3, 0, 0>.

Ein Vergleich ergibt, dass das Laufbandsegment durch die Maschine ersetzt werden kann.

Insgesamt zeigt das Beispiel, wie durch die Erfindung Anlagenkomponenten durch andere, ungleiche Anlagenkomponenten ersetzt werden können.

### Bezugszeichenliste

- 1: Automatisierungsanlage
- 2: Anlagenkomponenten
- 3: defekte Anlagenkomponente
- 4: vorgelagerte Anlagenkomponente
- 5: nachgelagerte Anlagenkomponente
- 6: Fließband
- 7: Produkt
- 8: Empfangsort
- 9: Fördergeschwindigkeit
- 10: Endort
- 11: Fördergeschwindigkeit
- 12: Steuervorrichtung
- 13: Ersatzkomponente
- 14: Ersatzkomponente
- 15: Einbauplatz
- 16: Roboter
- 17: Roboterarm
- 18: Komponentenbeschreibung
- 19: Komponentenbeschreibung
- 20: Eingangsbedingungen
- 20': Eingangsbedingungen
- 21: Ausgabebedingungen
- 21': Ausgabebedingungen
- 22: Platzbeschreibung
- 23: Schnittstelle

## Patentansprüche

1. Verfahren zum Auswechseln einer defekten Anlagenkomponente (3) in einer Automatisierungsanlage (1), wobei eine Steuervorrichtung (12) der Automatisierungsanlage (1) die folgenden Schritte durchführt:
- für einen Betriebsplatz (15) der Anlagenkomponente (3) Bereitstellen einer Platzbeschreibung (22), die zumindest eine an dem Betriebsplatz (15) zu erfüllende Betriebsbedingung (8, 9, 10, 11) enthält,
- für zumindest eine mögliche Ersatzkomponente (13, 14) jeweils Bereitstellen einer Komponentenbeschreibung (18, 19), die unabhängig von der technischen Bauweise der Ersatzkomponente (13, 14) beschriebene, von der Ersatzkomponente (13, 14) einnehmbare Betriebszustände enthält,
- Ermitteln derjenigen Komponentenbeschreibung (18, 19), bei welcher die einnehmbaren Betriebszustände jede in der Platzbeschreibung enthaltene Betriebsbedingung (8, 9, 10, 11) erfüllen,
- Auswählen der zu der ermittelten Komponentenbeschreibung (18, 19) gehörenden Ersatzkomponente (18, 19) und
- Signalisieren der ausgewählten Ersatzkomponente (18, 19) für einen Einbau an dem Betriebsplatz (15)
**dadurch gekennzeichnet, dass**
die Platzbeschreibung (22) als die zumindest eine Betriebsbedingung zumindest
- eine Eingangsbedingung (20') enthält, die einen Betriebszustand (9) einer dem Betriebsplatz zuarbeitenden Anlagenkomponente (4) definiert oder
- eine Ausgabebedingung (21') enthält , die einen Betriebszustand einer dem Betriebsplatz nachgelagerten Anlagenkomponente (5) definiert.

2. Verfahren nach Anspruch 1, wobei bei der Platzbeschreibung (22) die zumindest eine Betriebsbedingung (8, 9, 10, 11) jeweils unabhängig davon definiert ist, wie die Betriebsbedingung (8, 9, 10, 11) erfüllt wird.

3. Verfahren nach einem der vorhergehenden Ansprüche, wobei die Platzbeschreibung (22) als die zumindest eine Betriebsbedingung zumindest eine Eingangsbedingung (20') enthält, die jeweils
einen am Betriebsplatz (15) zu Beginn eines an dem Betriebsplatz (15) durchgeführten Prozessschrittes von der Automatisierungsanlage (1) benötigten Betriebszustand (8) der Ersatzkomponente definiert.

4. Verfahren nach einem der vorhergehenden Ansprüche, wobei die Platzbeschreibung als die zumindest eine Betriebsbedingung zumindest eine Ausgabebedingung (21') enthält, die jeweils
- einen am Betriebsplatz von der Anlage benötigten Endzustand der Ersatzkomponente und/oder
- einen Endzustand eines an dem Betriebsplatz zu bearbeitenden Produkts
definiert.

5. Verfahren nach einem der vorhergehenden Ansprüche, wobei jede Komponentenbeschreibung (18, 19) zumindest eine von der Ersatzkomponente (13, 14) benötigte Betriebsumgebungsbedingung enthält und durch die Steuervorrichtung (12) diejenige Ersatzkomponente (13, 14) ausgewählt wird, deren zumindest eine Betriebsumgebungsbedingung durch den Betriebsplatz (15) erfüllt wird.

6. Verfahren nach einem der vorhergehenden Ansprüche, wobei jede Komponentenbeschreibung (18, 19) eine Schnittstellendefinition einer elektronischen Schnittstelle der Ersatzkomponente (13, 14) umfasst und durch die Schnittstellendefinition ein über die Schnittstelle (23) übertragener Parameter und/oder ein Signalformat eines Signals beschrieben ist und durch die Steuervorrichtung (12) eine Kompatibilität einer anlagenseitigen elektronischen Anschlussschnittstelle mit der Schnittstelle (23) abgeglichen wird.

7. Verfahren nach Anspruch 6, wobei eine Signalkonvertierung erzeugt wird, durch welche das Signal der Schnittstelle (23) und ein Signal der anlagenseitigen Anschlussschnittstelle ineinander umgerechnet werden.

8. Verfahren nach einem der vorhergehenden Ansprüche, wobei jede Komponentenbeschreibung (18, 19) als ein digitales Modell der Ersatzkomponente (13, 14) bereitgestellt ist und durch das Modell ein Verhalten der Ersatzkomponente (13, 14) an einer physikalischen Schnittstelle und/oder einer Steuerschnittstelle der Ersatzkomponente nachgebildet wird.

9. Verfahren nach einem der vorhergehenden Ansprüche, wobei in jeder Komponentenbeschreibung (18, 19) jeweils von der Ersatzkomponente (13, 14) physikalische Eigenschaften, insbesondere geometrische Abmessungen und/oder Bauraumgeometrien und/oder Anschlussgeometrien, enthalten sind und durch die Steuervorrichtung (12) die physikalischen Eigenschaften mit korrespondierenden physikalischen Gegebenheiten am Betriebsplatz (15) verglichen werden und bei Erkennen eines Unterschieds zwischen den Eigenschaften und den korrespondierenden Gegebenheiten die zugehörige Ersatzkomponente (13, 14) von der Auswahl ausgeschlossen wird.

10. Verfahren nach einem der vorhergehenden Ansprüche, wobei in jeder Komponentenbeschreibung (18, 19) ein am Betriebsplatz (15) von der Automatisierungsanlage (1) bereitzustellendes Betriebsmittel angegeben ist und durch die Steuervorrichtung (12) die zugehörige Ersatzkomponente (13, 14) von der Auswahl ausgeschlossen wird, falls das Betriebsmittel fehlt.

11. Verfahren nach einem der vorhergehenden Ansprüche, wobei die Steuervorrichtung (12) durch eine zentrale Prozessoreinrichtung der Automatisierungsanlage oder durch eine dem Betriebsplatz benachbarte Anlagenkomponente (4, 5) bereitgestellt wird.

12. Verfahren nach einem der vorhergehenden Ansprüche, wobei die ausgewählte Ersatzkomponente (13, 14) auf der Grundlage der Platzbeschreibung (22) für einen Betrieb an dem Betriebsplatz (15) konfiguriert wird.

13. Verfahren nach einem der vorhergehenden Ansprüche, wobei in einem einen Betrieb der Automatisierungsanlage (1) festlegenden Engineering-Plan Engineeringdaten der defekten Anlagenkomponente (3) durch Engineeringdaten der ausgewählten Ersatzkomponente (13, 14) ersetzt werden.

14. Steuervorrichtung (12) für eine Automatisierungsanlage (1), wobei die Steuervorrichtung (12) eine Prozessoreinrichtung aufweist, die dazu ausgelegt ist, ein Verfahren nach einem der vorhergehenden Ansprüche durchzuführen.

15. Automatisierungsanlage (1) mit zumindest einer Steuervorrichtung (12) nach Anspruch 14.

## Claims

1. Method for replacing a faulty installation component (3) in an automation installation (1), wherein a control apparatus (12) of the automation installation (1) performs the following steps:
- for an operating location (15) of the installation component (3), provision of a location description (22) that contains at least one operating condition (8, 9, 10, 11) that needs to be satisfied at the operating location (15),
- for at least one possible substitute component (13, 14), respective provision of a component description (18, 19) that contains operating states that are described independently of the technical design of the substitute component (13, 14) and can be adopted by the substitute component (13, 14),
- ascertainment of that component description (18, 19) for which the adoptable operating states satisfy each operating condition (8, 9, 10, 11) that the location description contains,
- selection of the substitute component (18, 19) that belongs to the ascertained component description (18, 19), and
- signaling of the selected substitute component (18, 19) for installation at the operating location (15),
**characterized in that**
the location description (22) contains, as the at least one operating condition, at least
- one input condition (20') that defines an operating state (9) of an installation component (4) that assists the operating location or
- one output condition (21') that defines an operating state of an installation component (5) that is downstream of the operating location.

2. Method according to claim 1, wherein the location description (22) has the at least one operating condition (8, 9, 10, 11) respectively defined independently of how the operating condition (8, 9, 10, 11) is satisfied.

3. Method according to either of the preceding claims, wherein the location description (22) contains, as the at least one operating condition, at least one input condition (20') that respectively defines
an operating state (8) of the substitute component, which operating state is needed by the automation installation (1) at the operating location (15) at the beginning of a process step performed at the operating location (15).

4. Method according to one of the preceding claims, wherein the location description contains, as the at least one operating condition, at least one output condition (21') that respectively defines
- a final state of the substitute component, which final state is needed by the installation at the operating location, and/or
- a final state of a product that needs to be handled at the operating location.

5. Method according to one of the preceding claims, wherein each component description (18, 19) contains at least one operating environment condition that is needed by the substitute component (13, 14), and the control apparatus (12) selects that substitute component (13, 14) whose at least one operating environment condition is satisfied by the operating location (15).

6. Method according to one of the preceding claims, wherein each component description (18, 19) comprises an interface definition for an electronic interface of the substitute component (13, 14), and the interface definition describes a parameter that is transmitted via the interface (23) and/or a signal format of a signal, and the control apparatus (12) collates a compatibility of an installation-side electronic connection interface with the interface (23).

7. Method according to Claim 6, wherein a signal conversion is produced that converts the signal from the interface (23) and a signal from the installation-side connection interface into one another.

8. Method according to one of the preceding claims, wherein each component description (18, 19) is provided as a digital model of the substitute component (13, 14), and the model simulates a behavior of the substitute component (13, 14) on a physical interface and/or a control interface of the substitute component.

9. Method according to one of the preceding claims, wherein each component description (18, 19) contains physical properties, particularly geometrical dimensions and/or installation space geometries and/or connection geometries, from the respective substitute component (13, 14), and the control apparatus (12) compares the physical properties with corresponding physical circumstances at the operating location (15), and, in the event of identification of a difference between the properties and the corresponding circumstances, excludes the associated substitute component (13, 14) from the selection.

10. Method according to one of the preceding claims, wherein each component description (18, 19) indicates a resource that needs to be provided at the operating location (15) by the automation installation (1), and the control apparatus (12) excludes the associated substitute component (13, 14) from the selection if the resource is absent.

11. Method according to one of the preceding claims, wherein the control apparatus (12) is provided by a central processor device of the automation installation or by an installation component (4, 5) that is next to the operating location.

12. Method according to one of the preceding claims, wherein the selected substitute component (13, 14) is configured for operation at the operating location (15) on the basis of the location description (22).

13. Method according to one of the preceding claims, wherein in an engineering plan that determines operation of the automation installation (1), engineering data for the faulty installation component (3) are replaced by engineering data for the selected substitute component (13, 14).

14. Control apparatus (12) for an automation installation (1), wherein the control apparatus (12) has a processor device that is designed to carry out a method according to one of the preceding claims.

15. Automation installation (1) having at least one control apparatus (12) as claimed in Claim 14.

## Revendications

1. Procédé pour remplacer un composant d'installation défectueux (3) dans une installation d'automatisation (1), dans lequel un dispositif de commande (12) de l'installation d'automatisation (1) exécute les étapes suivantes :
- pour un emplacement de fonctionnement (15) du composant de l'installation (3), fourniture d'un descriptif de l'emplacement (22), qui contient au moins une condition de fonctionnement (8, 9, 10, 11) à satisfaire à l'emplacement de fonctionnement (15),
- pour au moins un composant de remplacement possible (13, 14), fourniture respective d'un descriptif du composant (18, 19) qui contient des états de fonctionnement pouvant être adoptés par le composant de remplacement (13, 14), décrits indépendamment de la construction technique du composant de remplacement (13, 14),
- détermination du descriptif de composant (18, 19) dans lequel les états de fonctionnement pouvant être adoptés satisfont à chaque condition de fonctionnement (8 , 9, 10, 11) contenue dans le descriptif de l'emplacement,
- sélection du composant de remplacement (18, 19) correspondant au descriptif du composant (18, 19) déterminé et
- communication du composant de remplacement (18, 19) sélectionné pour être monté à l'emplacement de fonctionnement (15),
**caractérisé en ce que**
le descriptif de l'emplacement (22) contient, en tant qu'au moins une condition de fonctionnement :
- au moins une condition d'entrée (20'), qui définit un état de fonctionnement (9) d'un composant de l'installation (4) auxiliaire à l'entrée de l'emplacement de fonctionnement ou
- au moins une condition de sortie (21*'*) qui définit un état de fonctionnement d'un composant de l'installation (5) disposé en aval de l'emplacement de fonctionnement.

2. Procédé selon la revendication 1, dans lequel, dans le descriptif de l'emplacement (22), la au moins une condition de fonctionnement (8, 9, 10, 11) est respectivement définie indépendamment de la façon dont la condition de fonctionnement (8, 9, 10, 11) est satisfaite.

3. Procédé selon l'une des revendications précédentes, dans lequel le descriptif de l'emplacement (22) contient, en tant que la au moins une condition de fonctionnement, au moins une condition d'entrée (20'), qui définit respectivement un état de fonctionnement (8) du composant de remplacement requis par l'installation d'automatisation (1) à l'emplacement de fonctionnement (15) au début d'une étape d'un processus exécutée à l'emplacement de fonctionnement (15).

4. Procédé selon l'une des revendications précédentes, dans lequel le descriptif de l'emplacement contient, en tant que la au moins une condition de fonctionnement, au moins une condition de sortie (21'), qui définit respectivement
- un état final du composant de remplacement requis par l'installation à l'emplacement de fonctionnement, et/ou
- un état final d'un produit à traiter à l'emplacement de fonctionnement.

5. Procédé selon l'une des revendications précédentes, dans lequel chaque descriptif de composant (18, 19) contient au moins une condition d'environnement de fonctionnement requise par le composant de remplacement (13, 14) et le composant de remplacement (13, 14) dont la au moins une condition d'environnement de fonctionnement est satisfaite par l'emplacement de fonctionnement (15) est sélectionné par le dispositif de commande (12).

6. Procédé selon l'une des revendications précédentes, dans lequel chaque descriptif de composant (18, 19) comprend une définition d'interfaces d'une interface électronique du composant de remplacement (13, 14) et un paramètre transmis via l'interface (23) et/ou un format de signal d'un signal est décrit par la définition d'interfaces et la compatibilité d'une interface de connexion électronique du côté d'installation avec l'interface (23) est comparée par le dispositif de commande (12).

7. Procédé selon la revendication 6, dans lequel une conversion du signal est produite, par laquelle le signal de l'interface (23) et un signal de l'interface de connexion du côté installation sont convertis entre eux.

8. Procédé selon l'une des revendications précédentes, dans lequel chaque descriptif de composant (18, 19) est fourni sous forme d'un modèle numérique du composant de remplacement (13, 14) et un comportement du composant de remplacement (13, 14) à une interface physique et/ou une interface de commande du composant de remplacement est simulé par le modèle.

9. Procédé selon l'une des revendications précédentes, dans lequel des propriétés physiques respectives du composant de remplacement (13, 14), notamment des dimensions géométriques et/ou des géométries d'espace de montage et/ou des géométries de connexion sont contenues dans chaque descriptif de composant (18, 19) et les propriétés physiques sont comparées par le dispositif de commande (12) avec les données physiques correspondantes à l'emplacement de fonctionnement (15) et, en cas de détection d'une différence entre les propriétés et les données correspondantes, le composant de remplacement correspondant (13, 14) est exclu de la sélection.

10. Procédé selon l'une des revendications précédentes, dans lequel un équipement à fournir à l'emplacement de fonctionnement (15) par l'installation d'automatisation (1) est indiqué dans chaque descriptif de composant (18, 19) et le composant de remplacement (13, 14) correspondant est exclu de la sélection par le dispositif de commande (12) dans le cas où l'équipement manque.

11. Procédé selon l'une des revendications précédentes, dans lequel le dispositif de commande (12) est prévu sous forme d'un moyen de processeur central de l'installation d'automatisation ou d'un composant d'installation (4, 5) voisin de l'emplacement de fonctionnement.

12. Procédé selon l'une des revendications précédentes, dans lequel le composant d'installation (13, 14) choisi est configuré pour fonctionner à l'emplacement de fonctionnement (15) sur la base du descriptif de l'emplacement (22).

13. Procédé selon l'une des revendications précédentes, dans lequel des données d'ingénierie du composant d'installation défectueux (3) dans un plan d'ingénierie spécifiant un fonctionnement de l'installation d'automatisation (1) sont remplacées par des données d'ingénierie du composant de remplacement sélectionné (13, 14) .

14. Dispositif de commande (12) pour une installation d'automatisation (1), dans lequel le dispositif de commande (12) comprend un moyen de processeur qui est configuré pour exécuter un procédé selon l'une des revendications précédentes.

15. Installation d'automatisation (1) comprenant au moins un dispositif de commande (12) selon la revendication 14.
